# EUROPEAN PATENT SPECIFICATION

(11) **EP 4 131 603 B1**
(45) Date of publication and mention of the grant of the patent: **21.01.2026**
(21) Application number: 21883302.8
(22) Date of filing: 21.10.2021
(51) Int. Cl.: H01M 50/20, H01M 50/213, H01M 10/6551, H01M 10/643, H01M 10/613, H01M 10/653, H01M 10/6554, H01M 10/6556, H01M 10/6567, H01M 50/264

(54) **BATTERY PACK AND MANUFACTURING METHOD THEREFOR**
BATTERIEPACK UND HERSTELLUNGSVERFAHREN DAFÜR
BLOC-BATTERIE ET SON PROCÉDÉ DE FABRICATION

(30) Priority: 22.10.2020 KR 20200137510
(43) Date of publication of application: 08.02.2023
(73) Proprietor: LG Energy Solution, Ltd., Seoul 07335 (KR)
(72) Inventor: YANG, Jin Oh, Daejeon 34122 (KR); CHOI, Hae Won, Daejeon 34122 (KR)
(74) Representative: Goddar, Heinz J.
(86) International application number: PCT/KR2021/014847
(87) International publication number: WO 2022/086234

(56) References cited:
- EP-A1- 3 654 444
- WO-A1-2019/164974
- WO-A1-2020/108988
- KR-A- 20050 011 724
- KR-A- 20190 047 499
- KR-A- 20190 078 094
- KR-A- 20190 132 631

## Description

### BACKGROUND

The present disclosure relates to a battery pack and a manufacturing method thereof, and more particularly, to a battery pack capable of stably fixing and supporting battery cells and a manufacturing method thereof.

In general, a battery cell may be repeatedly charged and discharged by an electrochemical reaction of components thereof. A battery pack may include a plurality of battery cells to increase an output voltage or an output current.

Here, since the battery cells of the battery pack are densely arranged, it is important to dissipate heat generated from each of the battery cells. When the heat generated from the battery cells are not properly dissipated in a charge and discharge process, heat accumulation may be generated in the battery pack to overheat the battery cells. Thus, the battery cells may be ignited and exploded.

Typically, when the battery pack is manufactured, a filling material is injected to a space between the battery cells. Since the filling material may fix the battery cells and easily dissipate the heat generated from the battery cells, the filling material may retard or prevent the ignition or explosion of the battery cells. However, the filling material is difficult to be uniformly filled in the entire space between the battery cells, and the filling of the filling material into the space between the battery cells requires much time and costs. For example, battery packs are disclosed in patent document 2 and patent document 3.

### [Related art document]

### [Patent document]

(Patent document 1) KR2019-0132631 A
(Patent document 2) WO 2019/164974 A1
(Patent document 3) EP 3 654 444 A1

### SUMMARY

The present disclosure provides a battery pack capable of stably fixing and supporting battery cells and a manufacturing method thereof.

The present disclosure also provides a battery pack capable of decreasing a usage amount of a filling material filled in a space between battery cells and a manufacturing method thereof.

In accordance with an aspect of the invention, a battery pack includes: a frame having an inner space and an opened one side; a plurality of battery cells each having one end disposed in the inner space of the frame and the other end protruding to the outside of one side of the frame; a filling material filled in the inner space of the frame; a heat sink disposed to face one side of the frame, thereby cooling the battery cells; and a plurality of cell holders having a plurality of insertion holes to which the other ends of the battery cells are respectively inserted and stacked to each other between the frame and the heat sink. Here, a volume of the inner space of the frame and an amount of the filling material filled in the inner space of the frame are adjusted according to the stacked number of the cell holders.

The cell holders may support a perimeter of the other end of each of the battery cells, and the filling material may not be filled in a space in which the cell holders are disposed and support the one end except for the other end of each of the battery cells.

The cell holder may have a plate shape to cover a cross-section of the inner space of the frame, and a perimeter of the cell holder may contact one side end of the frame.

The cell holder may include a plurality of fixing plates that aredetachably connected on a plane in correspondence to an arrangement structure of the battery cells, and the insertion holes may be defined in the fixing plate.

At least a portion of the fixing plates may have the different number of the insertion holes.

A total thickness of the stacked cell holders may be 20% or more to 60% or less of a length of the battery cell.

A projection may be provided on one of the frame and the cell holders, which is closest to the frame, and a coupling groove to which the projection is inserted may be provided on the other thereof.

A material of the cell holder may include plastic, and a material of the filling material may include silicon.

In accordance with another aspect of the invention, a method for manufacturing a battery pack includes: storing one ends of the battery cells in an inner space of a frame; stacking a plurality of cell holders at one side of the frame and respectively inserting the other ends of the battery cells, which protrude to the outside of the frame, to insertion holes formed in the cell holders; and injecting a filling material to the inner space of the frame in order to support a perimeter of each of the one ends except for the other ends of the battery cells. Here, the stacking of the plurality of cell holders includes setting the stacked number of the cell holders so as to adjust a volume of the inner space of the frame and an amount of the filling material filled in the inner space of the frame.

The setting of the stacked number of the cell holders may include adjusting a total thickness of the stacked cell holders in a range from 20% to 60% of a length of the battery cell.

### BRIEF DESCRIPTION OF THE DRAWINGS

Exemplary embodiments can be understood in more detail from the following description taken in conjunction with the accompanying drawings, in which:
FIG. 1 is a perspective view illustrating a battery pack in accordance with an exemplary embodiment;
FIG. 2 is an exploded perspective view illustrating a structure of the battery pack in accordance with an exemplary embodiment;
FIG. 3 is a front view illustrating the battery pack in accordance with an exemplary embodiment;
(a) of FIG. 4 is a side view illustrating a coupling structure of a frame and cell holders in accordance with an exemplary embodiment;
(b) of FIG. 4 is a side view illustrating a coupling structure of a frame and cell holders in accordance with another exemplary embodiment;
(a) of FIG. 5 is a plan view illustrating a structure of the cell holder in accordance with an exemplary embodiment;
(b) of FIG. 5 is a plan view illustrating a structure of a cell holder in accordance with another exemplary embodiment;
(c) of FIG. 5 is a plan view illustrating a structure of a cell holder in accordance with yet another exemplary embodiment; and

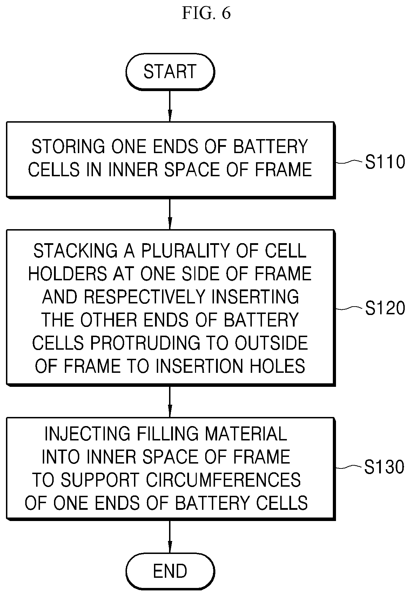

FIG. 6 is a flowchart representing a method for manufacturing a battery pack in accordance with an exemplary embodiment.

### DETAILED DESCRIPTION OF EMBODIMENTS

Hereinafter, specific embodiments will be described in detail with reference to the accompanying drawings. The present disclosure may, however, be embodied in many different forms and should not be construed as being limited to the embodiments set forth herein; rather, these embodiments are provided so that this disclosure will be thorough and complete, and will fully convey the concept of the invention to those skilled in the art. In the figures, the dimensions of layers and regions are exaggerated for clarity of illustration, and like reference numerals refer to like elements throughout.

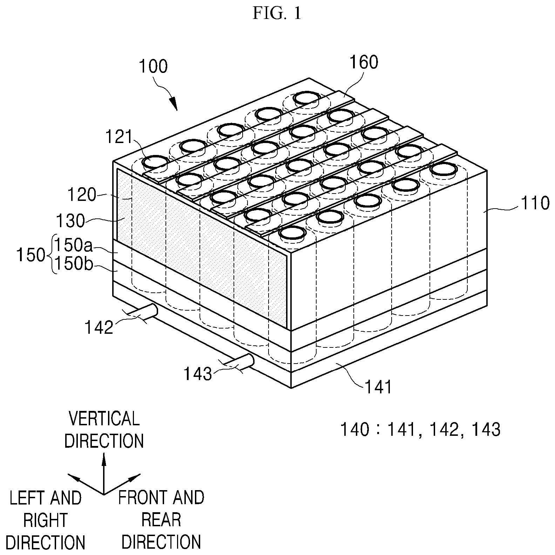

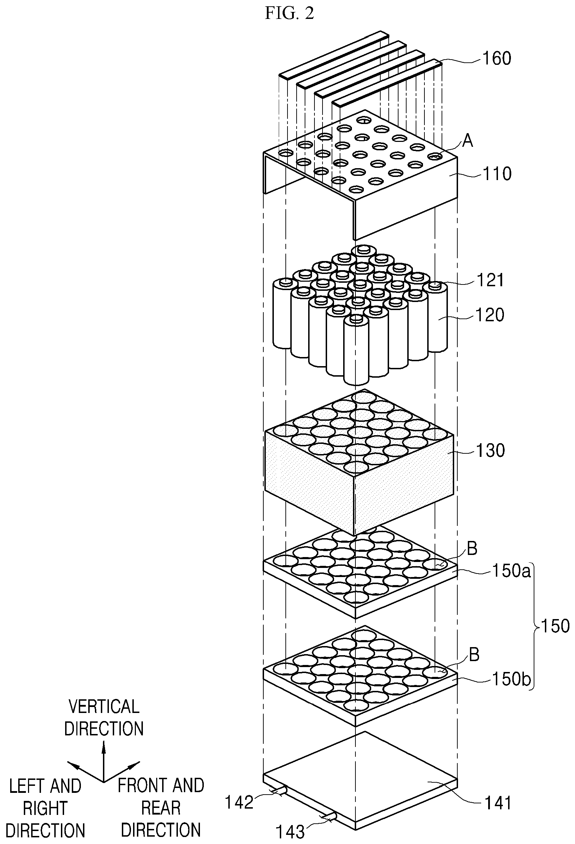

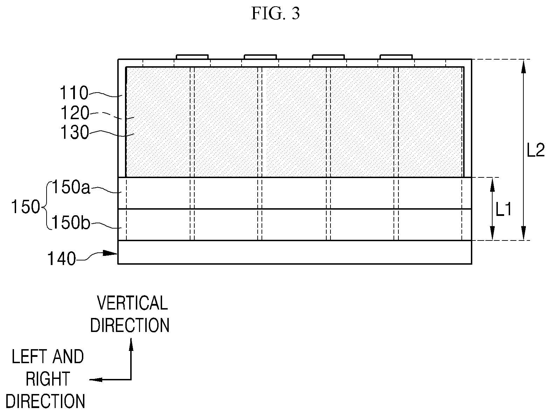

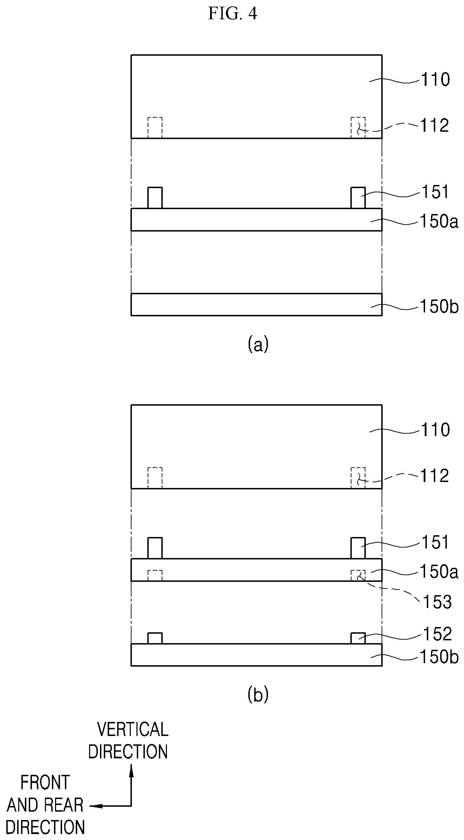

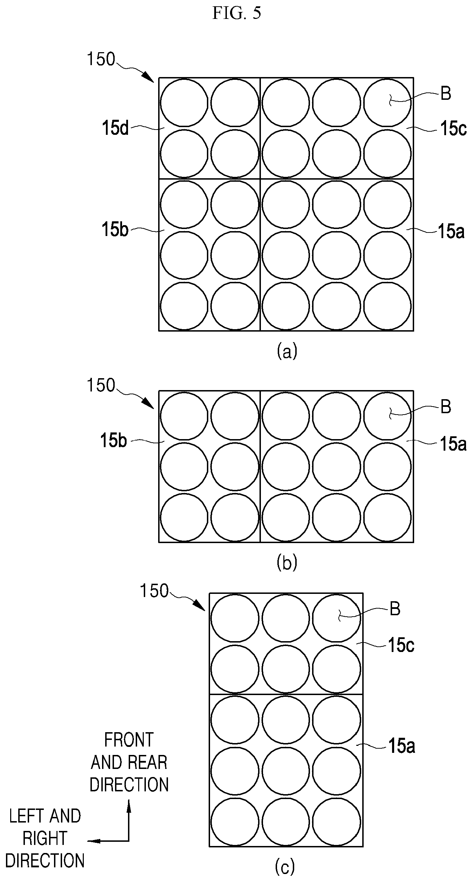

FIG. 1 is a perspective view illustrating a battery pack in accordance with an exemplary embodiment, FIG. 2 is an exploded perspective view illustrating a structure of the battery pack in accordance with an exemplary embodiment, FIG. 3 is a front view illustrating the battery pack in accordance with an exemplary embodiment, FIG. 4 is a side view illustrating a coupling structure of a frame and cell holders in accordance with an exemplary embodiment, and FIG. 5 is a plan view illustrating a structure of the cell holder in accordance with an exemplary embodiment. Hereinafter, a structure of the battery pack in accordance with an exemplary embodiment will be described.

The battery pack in accordance with an exemplary embodiment according to the invention is a device for supplying power to electronic equipment or system. Referring to FIGS. 1 and 2, a battery pack 100 includes a frame 110, a plurality of battery cells 120, a filling material 130, a heat sink 140, and a cell holder 150.

The battery cell 120 may have a cylindrical shape. For example, the battery cell 120 may be a secondary battery cell and include a positive electrode collector, a negative electrode collector, a separator, an active material, and an electrolyte. The battery cell 120 may be repeatedly charged and discharged by an electrochemical reaction of the above-described components thereof.

Here, the battery cell 120 is provided in plurality. The battery cells 120 may be spaced apart from each other at predetermined positions. The battery cells 120 may be electrically connected in series or parallel. Thus, the battery pack 100 may increase an output voltage or an output current.

Also, each of the battery cells 120 has one end (or upper end) disposed in an inner space of the frame 110 and the other end (or lower end) protruding to the outside of one side (or lower side) of the frame 110. That is, the battery cells 120 may have a length extending in one direction (or vertical direction) greater than that of the frame 110.

The frame 110 may have a chamber shape. For example, the frame 110 may have a cuboid box shape. The frame 110 has an inner space for accommodating the battery cells 120.

Here, the frame 110 has an opened one side (or lower side). For example, as the entire low side of the frame 110 is opened, an opening may be formed. Thus, the battery cells 120 may be entered to the inside of the frame 110 through the opening. Since each of the battery cells 120 has the length in the vertical direction greater than that of the frame 110, the lower end of each of the battery cells 120 may protrude from the lower side of the frame 110.

Also, a plurality of through-holes A may be defined in the other side (or top surface) of the frame 110. For example, the through-holes A may each have a circular shape and be arranged in the form of a x b. A terminal disposed at the upper end of the battery cell 120 may be inserted to the through-hole A. Thus, as the terminals of the battery cells 120 are inserted to the different through-holes A, respectively, the battery cells 120 may be arranged in the form of a x b based on an array of the through-holes A.

Here, the terminals of the battery cells 120 may be respectively inserted to the through-holes A and exposed to the outside of the frame 110. A busbar 160 may be installed on the frame 110 and connected with the terminals. For example, the busbar 160 may extend in one direction (or front and rear direction) and be provided in plurality, so that a plurality of busbars 160 are spaced apart from each other in the other direction (or left and right direction). Thus, the battery cells 120 spaced apart from each other in one direction may be electrically connected to each other by the busbars 160. However, the exemplary embodiment is not limited to the number of the busbars 160 and the structure of electrically connecting the battery cells 120. For example, the number of the busbars 160 and the structure of electrically connecting the battery cells 120 may be variously provided.

Also, the frame 110 may have an opened one surface (or front surface). Thus, the filling material 130 may be injected to the inner space of the frame 110 through the opened front surface. However, the exemplary embodiment is not limited to the structure and shape of the frame 110. For example, the frame 110 may have various structures and shapes.

The filling material 130 is filled in the inner space of the frame 110. That is, the filling material 130 may be filled in an empty space that is not occupied by the battery cells 120 in the inner space of the frame 110. Thus, the filling material 130 may be supplied between the battery cells 120 to hold the battery cells 120.

Also, a material of the filling material 130 may include silicon. Thus, the filling material 130 may simultaneously have a thermal conductivity and an adhesive property. Thus, the filling material 130 may be easily formed along a shape of the space between the battery cells 120 to fix the battery cells 120 and transfer the heat generated from the battery cells 120 to the outside.

Here, a feature of providing the filling material 130 to the entire space between the battery cells 120 may require much time and costs. Thus, a volume of the inner space of the frame 110 may be decreased by including the cell holders 150 to decrease a size of the frame 110. Thus, a usage amount of the filling material 130 may be decreased.

The heat sink 140 faces one side (or lower side) of the frame 110. For example, the heat sink 140 may be spaced apart from the lower side of the frame 110 and directly or indirectly contact the battery cells 120 to cool the battery cells 120. The heat sink 140 may include a cooling member 141, a cooling medium supply member 142, and a cooling medium discharge member 143.

The cooling member 141 may have a plate shape. For example, the cooling member 141 may have a rectangular shape along a flat surface shape of the frame 110, and an area of a top surface of the cooling member 141 may be equal to or greater than that of a flat surface of the frame 110. Thus, the top surface of the cooling member 141 may directly or indirectly contact all of the battery cells 120.

Also, a flow path through which the cooling medium moves may be formed in the cooling member 141. For example, the cooling medium may be a coolant. Thus, the cooling medium moving along the flow path formed in the cooling member 141 may absorb heat generated from the battery cells 120. Thus, the battery cells 120 may be cooled as a temperature thereof is decreased by the cooling medium.

Here, the cooling member 141 may be made of a material having a high thermal conductivity. For example, the cooling member 141 may be made of aluminum or an aluminum alloy material. Thus, the cooling member 141 may easily transfer the heat generated from the battery cells 120 to the cooling medium. Thus, the temperature of the battery cells 120 may be quickly adjusted.

The cooling medium supply member 142 may be connected to the cooling member 141. For example, the cooling medium supply member 142 may be a line for supplying the cooling medium to the cooling member 141 and connected to one end of the flow path formed in the cooling member 141. Thus, the cooling medium supplied to the one end of the flow path through the cooling medium supply member 142 may absorb the heat of the battery cells 120 while passing through the flow path.

The cooling medium supply member 143 may be connected to the cooling member 141. For example, the cooling medium discharge member 143 may be a line for discharging the cooling medium in the cooling member 141 and connected to the other end of the flow path formed in the cooling member 141. Thus, the cooling medium may move from the one end to the other end of the flow path and be discharged to the outside through the cooling medium discharge member 143. However, the exemplary embodiment is not limited to the structure and shape of the heat sink 140. For example, the heat sink 140 may have various structures and shapes.

The cell holder 150 may have a plate shape. For example, the cell holder 150 may have a rectangular shape along the flat surface shape of the frame 110, and an area of a top surface of the cell holder 150 may be equal to or greater than that of the flat surface of the frame 110. Thus, when the cell holder 150 is installed so that a perimeter of the top surface of the cell holder 150 contacts an one side end of the frame 110, the cell holder 150 may cover an entire cross-section (or lower portion) of the inner space of the frame 110. Thus, a lower opening formed in the frame 110 may be sealed by the cell holder 150.

Here, a material of the cell holder 150 may include plastic. Thus, the cell holder 150 may be manufactured at less cost than the filling material 130 made of silicon.

Also, a plurality of insertion holes B is defined in the cell holder 150. Each of the insertion holes B may be formed along a perimetrical shape of the battery cell 120, and an internal diameter of the insertion hole B may be equal to or greater than an external diameter of the battery cell 120. Thus, the other ends of the battery cells 120 may pass through and be inserted to the insertion holes B, respectively.

Here, the insertion holes B may respectively face the through-holes A of the frame 110. That is the insertion holes B may be arranged in the form of a x b based on the array of the through-holes A. Thus, the battery cell 120 may have the upper end inserted to and supported by the through-hole A and the lower end inserted to and supported by the insertion hole B. Thus, the battery cells 120 may maintain a stably fixed state.

The cell holder 150 is provided in plurality. The cell holders 150 are stacked to each other between the frame 110 and the heat sink 140. For example, as a first cell holder 150a and a second cell holder 150b are provided, the cell holders 150 may be stacked in a vertical direction and disposed in a spaced space between the frame 110 and the heat sink 140. Thus, a top surface of the first cell holder 150a may be connected to the lower portion of the frame 110, and a bottom surface of the second cell holder 150b may be connected to the heat sink 140. However, the exemplary embodiment is not limited to the number of the cell holders 150. For example, three or more cell holders may be provided instead of two cell holders.

Here, the cell holders 150 may support the battery cells 120 together with the filling material 130. That is, the filling material 130 supports a perimeter of the one end (or upper end) of each of the battery cells 120, and each of the cell holders 150 supports a perimeter of the other end (or lower end) of each of the battery cells 120 except for the upper end of each of the battery cells 120. Since the filling material 130 is not filled in a space in which the cell holders 150 are disposed, as a portion supported by the cell holders 150 is increased in the battery cell 120, a portion supported by the filling material 130 may be decreased. Thus, a volume of the inner space of the frame 110 and an amount of the filling material 130 filled in the inner space of the frame 110 are adjusted according to the number of staked cell holders 150.

For example, when the number of the provided cell holders 150 is increased, the volume of the inner space of the frame 110 may be decreased, and when the number of the provided cell holders 150 is decreased, the volume of the inner space of the frame 110 may be increased. Thus, when the volume of the inner space of the frame 110 is decreased, the amount of the filling material 130 filled in the inner space of the frame 110 may be decreased, and when the volume of the inner space of the frame 110 is increased, the amount of the filling material 130 filled in the inner space of the frame 110 may be increased. Thus, the usage amount of the filling material 130 may be decreased by adjusting the stacked number or height of the cell holders 150.

Here, as illustrated in FIG. 3, a total thickness L1 of the cell holders 150 may be 20% or more to 60% or less of a length L2 of the battery cell 120. When the total thickness L1 of the cell holders 150 is less than 20% of the length L2 of the battery cell 120, one portion of the battery cell 120, which is inserted to the cell holders 150, may be extremely decreased. Thus, as the volume of the inner space of the frame 110 is increased, the usage amount of the filling material 130 is increased to accommodate the other portion of the battery cell 120, which is not inserted to the cell holders 150. When the total thickness L1 of the cell holders 150 is greater than 60% of the length L2 of the battery cell 120, one portion of the battery cell 120, which is inserted to the cell holders 150, may be extremely increased. Thus, the size of the frame 110 is extremely decreased. The total thickness L1 of the cell holders 150 may be 20% or more to 60% or less of a length L2 of the battery cell 120 in order to decrease the usage amount of the filling material and appropriately maintain the size of the frame 110.

Also, a first projection 151 may be disposed on one of the frame 110 and the cell holder 150 installed closest to the frame 110, and a first coupling groove 112 to which the projection is inserted may be disposed on the other thereof For example, as illustrated in (a) of FIG. 4, the first projection 151 may protrude from the top surface of the first cell holder 150a, and the first coupling groove 112 may be defined in the lower end of the frame 110. Thus, when the first cell holder 150a is coupled to the lower side of the frame 110, the first projection 151 may be inserted to the first coupling groove 112. Thus, the first cell holder 150a and the frame 110 may be easily aligned in the vertical direction, and the first cell holder 150a and the frame 110 may be further stably coupled.

Also, each of the first projection 151 and the first coupling groove 112 may be provided in plurality. The first projections 151 may be disposed along a perimeter of the first cell holder 150a, and the first coupling grooves 112 may be disposed along a lower perimeter of a wall of the frame 110 to face the first projections 151. Thus, the entire perimeters of the first cell holder 150a and the frame 110 may be stably coupled. However, the exemplary embodiment is not limited thereto. For example, the first coupling groove may be defined in the first cell holder 150a, and the first projection may protrude downward from the frame 110.

Also, as illustrated in (b) of FIG. 4, a second groove 153 may be defined in a bottom surface of the first cell holder 150a, and a second projection 152 may protrude from a top surface of the second cell holder 150b. Thus, when the second cell holder 150b is coupled to a lower side of the first cell holder 150a, the second projection 152 may be inserted to the second coupling groove 153. Thus, the first cell holder 150a and the second cell holder 150b may be easily aligned in the vertical direction and further stably coupled.

Also, each of the second projection 152 and the second coupling groove 153 may be provided in plurality. The second projections 152 may be disposed along a perimeter of the second cell holder 150b, and the second coupling grooves 153 may be disposed along a perimeter of the first cell holder 150a to face the second projections 152. Thus, the entire perimeters of the first cell holder 150a and the second cell holder 150b may be stably coupled. However, the exemplary embodiment is not limited thereto. For example, the second projection may protrude downward from the first cell holder 150a, and the second coupling groove may be defined in the second cell holder 150b.

Also, the cell holder 150 may include a plurality of fixing plates. The fixing plates may be detachably connected to each other on a plane in correspondence to an arrangement structure of the battery cells 120. That is, the fixing plates to be used may be selectively coupled according to the arrangement structure of the battery cells 120.

Here, when the insertion holes B may be defined in the fixing plate, and at least a portion of the fixing plates may have the different number of the insertion holes B. For example, as illustrated in FIG. 5, a first fixing plate 15a in which the insertion holes B are arranged in an array of 3 x 3, a second fixing plate 15b in which the insertion holes B are arranged in an array of 3 x 2, a third fixing plate 15c in which the insertion holes B are arranged in an array of 2 x 3, and a fourth fixing plate 15d in which the insertion holes B are arranged in an array of 2 x 2 may be provided.

When the battery cells 120 are arranged in an array of 5 x 5, one cell holder 150 obtained by connecting the first fixing plate 15a, the second fixing plate 15b, the third fixing plate 15c, and the fourth fixing plate 15d may be used as illustrated in (a) of FIG. 5. When the battery cells 120 are arranged in an array of 3 x 5, one cell holder 150 obtained by connecting the first fixing plate 15a and the second fixing plate 15b may be used as illustrated in (b) of FIG. 5. When the battery cells 120 are arranged in an array of 5 x 3, one cell holder 150 obtained by connecting the first fixing plate 15a and the third fixing plate 15c may be used as illustrated in (c) of FIG. 5. Thus, a structure of the cell holder 150 may be easily changed according to the various arrangement structures of the battery cells 120. However, the exemplary embodiment is not limited to the number or the structure of the fixing plate. For example, the fixing plate may have various structures and provided numbers.

FIG. 6 is a flowchart representing a method for manufacturing a battery pack in accordance with an exemplary embodiment. Hereinafter, the method for manufacturing the battery pack in accordance with an exemplary embodiment will be described.

The method for manufacturing the battery pack in accordance with an exemplary embodiment according to the invention relates to a method for stably fixing the battery pack and reducing a usage amount of a filling material. Referring to FIG. 6, the method for manufacturing the battery pack includes: a process S110 of storing one ends of battery cells in an inner space of a frame; a process S120 of stacking a plurality of cell holders at one side of the frame and respectively inserting the other ends of the battery cells, which protrude to the outside of the frame, to insertion holes defined in cell holders; and a process S130 of injecting a filling material into the inner space of the frame to support perimeters of the one ends except for the other ends of the battery cells.

Referring to FIGS. 1 to 3, one end (upper end) of each of battery cells 120 may be stored in an inner space of a frame 110 in the process S110. That is, the battery cells 120 may be entered to the inner space of the frame 110 through an opened one side (or lower side) of the frame 110, and terminals of the battery cells 120 may be respectively inserted to through-holes A defined in the other side (or top surface) of the frame 110. Thus, the battery cells 120 may be aligned along an arrangement shape of the through-holes A.

Here, each of the battery cells 120 may have a vertical length greater than that of the frame 110. Thus, the battery cells 120 may have the one ends disposed in the inner space of the frame 110 and the other ends (or lower ends) protruding downward and disposed at the outside of the frame 110.

Thereafter, a plurality of cell holders 150 may be stacked at one side of the frame 110. The cell holders 150 may be stacked and coupled to each other in a vertical direction, and a first cell holder 150a disposed at an uppermost side of the cell holders 150 may contact a lower portion of the frame 110 to cover the opened lower side of the frame 110.

Also, insertion holes B are formed in the cell holders 150. Thus, the other ends of the battery cells 120 may be inserted to the insertion holes B, respectively. Thus, the battery cells 120 may be stably fixed in position as the one ends of the battery cells 120 are disposed in the frame 110, and the other ends are supported by the cell holder 150.

Since the cell holders 150 are stacked, the insertion holes B formed in the cell holders 150 may communicate each other to have an increased vertical length. Thus, a portion of the battery cells 120, which is inserted to the insertion holes B communicating each other, may be increased, and a portion of the battery cells 120, which is disposed in the inner space of the frame 110, may be decreased. Thus, a volume of the inner space of the frame 110 may be decreased by decreasing the vertical length of the frame 110 as many as the number of the provided cell holders 150.

Also, a volume of the inner space of the frame 110 and an amount of the filling material 130 filled in the inner space of the frame 110 is adjusted while the cell holders 150 are stacked. That is, when the number of the provided cell holders 150 is increased, the volume of the inner space of the frame 110 may be decreased, and when the number of the provided cell holders 150 is decreased, the volume of the inner space of the frame 110 may be increased. Thus, when the volume of the inner space of the frame 110 is decreased, the amount of the filling material 130 filled in the inner space of the frame 110 may be decreased, and when the volume of the inner space of the frame 110 is increased, the amount of the filling material 130 filled in the inner space of the frame 110 may be increased. Thus, the usage amount of the filling material 130 may be decreased by adjusting the number or the height of the stacked cell holders 150.

Here, as illustrated in FIG. 3, a total thickness L1 of the cell holders 150 may be 20% or more to 60% or less of a length L2 of the battery cell 120. When the total thickness L1 of the cell holders 150 is less than 20% of the length L2 of the battery cell 120, a portion of the battery cell 120 inserted to the cell holders 150 may be extremely decreased. Thus, as the volume of the inner space of the frame 110 is increased, the usage amount of the filling material 130 is increased to accommodate the other portion of the battery cell 120, which is not inserted to the cell holders 150. When the total thickness L1 of the cell holders 150 is greater than 60% of the length L2 of the battery cell 120, one portion of the battery cell 120, which is inserted to the cell holders 150, may be extremely increased. Thus, a size of the frame 110 is extremely decreased. The total thickness L1 of the cell holders 150 may be 20% or more to 60% or less of the length L2 of the battery cell 120 in order to decrease the usage amount of the filling material and appropriately maintain the size of the frame 110.

Thereafter, the filling material is injected to the inner space of the frame in order to support a perimeter of the one end except for the other end of each of the battery cells in the process S130. That is, the filling material 130 may be filled in an empty space that is not occupied by the battery cells 120 in the inner space of the frame 110. Thus, the filling material 130 may be supplied between the battery cells 120 to hold the battery cells 120.

Here, the volume of the inner space of the frame 110 is decreased by the cell holders 150. Thus, the usage amount of the filling material 130 supplied to fill the inner space of the frame 110 may be decreased. When the usage amount of the filling material 130 is decreased, a time and costs required to fill the filling material 130 may be decreased. That is, since the filling material 130 is not filled in a space in which the cell holders 150 are stacked, the usage amount of the filling material 130 may be adjusted according to the stacked number or height of the cell holders 150 set based on a design specification of a battery pack 100.

Also, when the cell holders 150 are installed at one side of the frame 110 or after the filling material 130 is supplied to the inner space of the frame 110, an operation of installing a heat sink 140 may be performed. The heat sink 140 may be coupled to a second cell holder 150b disposed at a lowermost side of the cell holders 150 and directly or indirectly contact the battery cells 120 passing through the cell holders 150. Thus, the heat sink 140 may easily adjust a temperature of the battery cells 120.

As described above, the battery cells 120 may be fixed by using the plurality of cell holders 150. Thus, although the amount of the filling material 130 filled in a space between the battery cells 120 is decreased, the battery cells 120 may be stably supported. Thus, an efficiency of a process of manufacturing the battery pack 100 may be improved by decreasing the usage amount of the filling material 130.

In accordance with the exemplary embodiment, the battery cells may be fixed by using the plurality of cell holders. Thus, although the amount of the filling material filled in the space between the battery cells is decreased, the battery cells may be stably supported. Thus, the efficiency of the process of manufacturing the battery pack may be improved by decreasing the usage amount of the filling material.

## Claims

1. A battery pack (100) comprising:
a frame (110) having an inner space and an opened one side;
a plurality of battery cells (120) each having one end disposed in the inner space of the frame (110) and the other end protruding to the outside of one side of the frame (110);
a filling material (130) filled in the inner space of the frame (110);
a heat sink (140) disposed to face one side of the frame (110), thereby cooling the battery cells (120); and
a plurality of cell holders (150, 150a, 150b) having a plurality of insertion holes (B) to which the other ends of the battery cells (120) are respectively inserted and stacked to each other between the frame (110) and the heat sink (140),
wherein a volume of the inner space of the frame (110) and an amount of the filling material (130) filled in the inner space of the frame (110) are adjusted according to the stacked number of the cell holders (150, 150a, 150b).

2. The battery pack (100) of claim 1, wherein the cell holders (150, 150a, 150b) support a perimeter of the other end of each of the battery cells (120), and
the filling material (130) is not filled in a space in which the cell holders (150, 150a, 150b) are disposed and supports the one end except for the other end of each of the battery cells (120).

3. The battery pack (100) of claim 1, wherein the cell holder (150, 150a, 150b) has a plate shape to cover a cross-section of the inner space of the frame (110), and a perimeter of the cell holder (150, 150a, 150b) contacts one side end of the frame (110).

4. The battery pack (100) of claim 3, wherein the cell holder (150, 150a, 150b) comprises a plurality of fixing plates (15a, 15b, 15c, 15d) that are detachably connected on a plane in correspondence to an arrangement structure of the battery cells (120), and
the insertion holes (B) are defined in the fixing plate (15a, 15b, 15c, 15d).

5. The battery pack (100) of claim 4, wherein at least a portion of the fixing plates (15a, 15b, 15c, 15d) has the different number of the insertion holes (B).

6. The battery pack (100) of claim 3, wherein a total thickness (L1) of the stacked cell holders (150, 150a, 150b) is 20% or more to 60% or less of a length (L2) of the battery cell (100).

7. The battery pack (100) of claim 3, wherein a projection (151) is provided on one of the frame (110) and the cell holders (150, 150a, 150b), which is closest to the frame (110), and
A coupling groove (112) to which the projection (151) is inserted is provided on the other thereof.

8. The battery pack of any one of claims 1 to 7, wherein a material of the cell holder (150, 150a, 150b) comprises plastic, and
a material of the filling material comprises silicon.

9. A method for manufacturing a battery pack (100), comprising:
storing one ends of battery cells (120) in an inner space of a frame (110);
stacking a plurality of cell holders (150, 150a, 150b) at one side of the frame (110) and respectively inserting the other ends of the battery cells (120), which protrude to the outside of the frame (110), to insertion holes (B) formed in the cell holders (150, 150a, 150b); and
injecting a filling material (130) to the inner space of the frame (110) in order to support a perimeter of each of the one ends except for the other ends of the battery cells (120),
wherein the stacking of the plurality of cell holders (150, 150a, 150b) comprises setting the stacked number of the cell holders (150, 150a, 150b) so as to adjust a volume of the inner space of the frame (110) and an amount of the filling material (130) filled in the inner space of the frame (110).

10. The method of claim 9, wherein the setting of the stacked number of the cell holders (150, 150a, 150b) comprises adjusting a total thickness (L1) of the stacked cell holders (150, 150a, 150b) in a range from 20% to 60% of a length (L2) of the battery cell (100).

## Patentansprüche

1. Batteriepackung (100), aufweisend:
einen Rahmen (110), der einen Innenraum und eine geöffnete eine Seite aufweist;
eine Mehrzahl von Batteriezellen (120), wobei jede Batteriezelle ein in dem Innenraum des Rahmens (110) angeordnetes eine Ende aufweist, und das andere Ende zu der Außenseite von einer Seite des Rahmens (110) vorsteht;
ein Füllmaterial (130), das in den Innenraum des Rahmens (110) gefüllt ist;
eine Wärmesenke, die einer Seite des Rahmens (110) zugewandt angeordnet ist, wodurch die Batteriezellen (120) gekühlt werden; und
eine Mehrzahl von Zellenhaltern (150, 150a, 150b), die eine Mehrzahl von Einführlöcher (B) aufweisen, in die die anderen Enden der Batteriezellen (120) entsprechend eingeführt sind, und die übereinander zwischen dem Rahmen (110) und der Wärmesenke (140) gestapelt sind,
wobei ein Volumen des Innenraums des Rahmens (110) und eine Menge des in den Innenraum des Rahmens (110) eingefüllten Füllmaterials (130) entsprechend der gestapelten Anzahl der Zellenhalter (150, 150a, 150b) angepasst sind.

2. Batteriepackung (100) nach Anspruchs 1, wobei die Zellenhalter (150, 150a, 150b) einen Umfang des anderen Endes jeder der Batteriezellen stützt, und
wobei das Füllmaterial (130) nicht in einen Raum gefüllt ist, in dem die Zellenhalter (150, 150a, 150b) angeordnet sind, und wobei das Füllmaterial (130) das eine Ende, abgesehen von dem anderen Ende, jeder der Batteriezellen (120) stützt.

3. Batteriepackung (100) nach Anspruch 1, wobei der Zellenhalter (150, 150a, 150b) eine Plattenform aufweist, um einen Querschnitt des Innenraums des Rahmens (110) abzudecken, und wobei ein Umfang des Zellenhalters (150, 150a, 150b) ein Seitenende des Rahmens (110) kontaktiert.

4. Batteriepackung (100) nach Anspruch 3, wobei der Zellenhalter (150, 150a, 150b) eine Mehrzahl von Fixierplatten (15a, 15b, 15c, 15d) aufweist, die lösbar in einer Ebene verbunden sind, entsprechend einer Anordnungsstruktur der Batteriezellen (120), und
wobei die Einführlöcher (B) in der Fixierplatte (15a, 15b, 15c, 15d) gebildet sind.

5. Batteriepackung (100) nach Anspruch 4, wobei zumindest ein Abschnitt der Fixierplatten (15a, 15b, 15c, 15d) eine verschiedene Anzahl Einführlöcher (B) aufweist.

6. Batteriepackung (100) nach Anspruch 3, wobei eine Gesamtdicke (L1) der gestapelten Zellenhalter (150, 150a, 150b) zwischen 20 % oder mehr bis zu 60% oder weniger einer Länge (L2) der Batteriezelle (100) ist.

7. Batteriepackung (100) nach Anspruch 3, wobei ein Vorsprung (151) an einem aus Rahmen (110) und dem der Zellenhalter (150, 150a, 150b), welcher dem Rahmen (110) am nächsten ist, vorgesehen ist, und
wobei eine Verbindungsnut (112), in die der Vorsprung (151) eingeführt ist, an dem anderen dieser vorgesehen ist.

8. Batteriepackung (100) nach einem der Ansprüche 1 bis 7, wobei ein Material des Zellenhalters (150, 150a, 150b) Kunststoff umfasst, und
wobei ein Material des Füllmaterials Silikon umfasst.

9. Verfahren zur Herstellung einer Batteriepackung (100), aufweisend:
Aufnehmen einer Enden von Batteriezellen (120) in einem Innenraum eines Rahmens (110):
Stapeln einer Mehrzahl von Zellenhalter (150, 150a, 150b) an einer Seite des Rahmens (110) und entsprechendes Einführen der anderen Enden der Batteriezellen (120), welche zu der Außenseite des Rahmens (110) vorstehen, in Einführlöcher (B), die in den Zellenhaltern (150, 150a, 150b) gebildet sind; und
Einfüllen eines Füllmaterials (130) in den Innenraum des Rahmens (110), um einen Umfang von jedem des einen Endes, abgesehen von den anderen Enden, der Batteriezellen (120) zu stützen,
wobei das Stapeln der Mehrzahl von Zellenhaltern (150, 150a, 150b) ein Festlegen der gestapelten Anzahl der Zellenhalter (150, 150a, 150b) umfasst, um ein Volumen des Innenraums des Rahmens (110) und eine Menge von in den Innenraum des Rahmens (110) gefülltem Füllmaterial (130) anzupassen.

10. Verfahren nach Anspruch 9, wobei das Festlegen der gestapelten Anzahl der Zellenhalter (150, 150a, 150b) ein Anpassen einer Gesamtdicke (L1) der gestapelten Zellenhalter (150, 150a, 150b) in einem Bereich zwischen 20% bis 60% einer Länge (L2) der Batteriezelle (100) umfasst.

## Revendications

1. Bloc-batterie (100), comprenant :
un cadre (110) doté d'un espace intérieur et d'un côté ouvert ;
une pluralité de cellules de batterie (120) chacune possédant un bout disposé dans l'espace intérieur du cadre (110), et l'autre bout saillant vers l'extérieur d'un côté du cadre (110) ;
un matériau de remplissage (130) rempli dans l'espace intérieur du cadre (110) ;
un dissipateur thermique (140) disposé de façon à faire face à un côté du cadre (110), en refroidissant ainsi les cellules de batterie (120) ; et
une pluralité de supports de cellules (150, 150a, 150b) possédant une pluralité d'orifices d'insertion (B) dans lesquels les autres bouts des cellules de batterie (120) sont introduits et empilés respectivement les uns sur les autres entre le cadre (110) et le dissipateur thermique (140),
un volume de l'espace intérieur du cadre (110) et une quantité du matériau de remplissage (130) rempli dans l'espace intérieur du cadre (110) étant ajustés en fonction du nombre empilé de supports de cellules (150, 150a, 150b).

2. Bloc-batterie (100) selon la revendication 1, les supports de cellules (150, 150a, 150b) supportant un périmètre de l'autre bout de chacune des cellules de batterie (120), et
le matériau de remplissage (130) n'étant pas rempli dans un espace dans lequel sont disposés les supports de cellules (150, 150A, 150B) et supportant l'un bout, à l'exception de l'autre bout de chacune des cellules de batterie (120).

3. Bloc-batterie (100) selon la revendication 1, le support de cellule (150, 150a, 150b) ayant une forme de plaque pour couvrir une section transversale de l'espace intérieur du cadre (110), et un périmètre du support de cellule (150, 150a, 150b) étant placé contre une extrémité latérale du cadre (110).

4. Bloc-batterie (100) selon la revendication 3, le support de cellule (150, 150a, 150b) comprenant une pluralité de plaques de fixation (15a, 15b, 15c, 15d) reliées de manière amovible sur un plan en correspondance avec une structure d'agencement des cellules de batterie (120), et
les orifices d'insertion (B) étant définis dans la plaque de fixation (15a, 15b, 15c, 15d).

5. Bloc-batterie (100) selon la revendication 4, au moins une partie des plaques de fixation (15a, 15b, 15c, 15d) présentant le nombre différent d'orifices d'insertion (B).

6. Bloc-batterie (100) selon la revendication 3, une épaisseur totale (L1) des supports de cellules empilées (150, 150a, 150b) mesurant de 20 % ou davantage à 60 % ou moins d'une longueur (L2) de la cellule de batterie (100).

7. Bloc-batterie (100) selon la revendication 3, une saillie (151) étant agencée sur un du cadre (110) et des supports de cellules (150, 150a, 150b) le plus proche du cadre (110), et
une rainure d'accouplement (112), sur laquelle la saillie (151) est insérée, étant agencée sur l'autre de ceux-ci.

8. Bloc-batterie selon une quelconque des revendications 1 à 7, un matériau du support de cellule (150, 150a, 150b) comprenant du plastique, et
un matériau du matériau de remplissage comprenant du silicium.

9. Procédé de fabrication d'un bloc-batterie (100), comprenant :
le stockage d'un bout de cellules de batterie (120) dans un espace intérieur d'un cadre (110) ;
l'empilage d'une pluralité de supports de cellules (150, 150a, 150b) d'un côté du cadre (110) et l'insertion respectivement des autres bouts des cellules de batterie (120), qui font saillie vers l'extérieur du cadre (110), dans des trous d'insertion (B) formés dans les supports de cellules (150, 150a, 150b) ; et
l'injection d'un matériau de remplissage (130) dans l'espace intérieur du cadre (110) afin de soutenir un périmètre de chacun des bouts, excepté les autres bouts des cellules de batterie (120),
l'empilage de la pluralité de supports de cellule (150, 150a, 150b) comportant le réglage du nombre empilé de supports de cellule (150, 150a, 150b) de façon à ajuster un volume de l'espace intérieur du cadre (110) et une quantité de matériau de remplissage (130) rempli dans l'espace intérieur du cadre (110).

10. Procédé selon la revendication 9, le réglage du nombre empilé de supports de cellules (150, 150a, 150b) comprenant l'ajustement d'une épaisseur totale (L1) des supports de cellules empilés (150, 150a, 150b) dans une plage allant de 20 % à 60 % d'une longueur (L2) de la cellule de batterie (100).
